(19) Europäisches Patentamt
European Patent Office
Office européen des brevets

(11) EP 3 115 417 A1

(12) # EUROPÄISCHE PATENTANMELDUNG

(43) Veröffentlichungstag:
**11.01.2017 Patentblatt 2017/02**

(51) Int Cl.:
***C08L 69/00*** *(2006.01)*

(21) Anmeldenummer: **15175791.1**

(22) Anmeldetag: **08.07.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Covestro Deutschland AG**
**51373 Leverkusen (DE)**

(72) Erfinder:
- **WEHRMANN, Rolf**
  **47800 Krefeld (DE)**
- **HEUER, Helmut Werner**
  **51371 Leverkusen (DE)**
- **BOUMANS, Anke**
  **47574 Goch (DE)**

(74) Vertreter: **Levpat**
**c/o Covestro AG**
**Gebäude 4825**
**51365 Leverkusen (DE)**

(54) **SCHLAGZÄHMODIFIZIERTE POLYCARBONATZUSAMMENSETZUNGEN MIT VERBESSERTER FLIESSFÄHIGKEIT UND HOHER WÄRMEFORMBESTÄNDIGKEIT**

(57) Die vorliegende Erfindung betrifft die Verwendung von Diglycerolestern zur Steigerung der Fließfähigkeit schlagzähmodifizierter Polycarbonat-haltiger Zusammensetzungen, ohne negativen Einfluss auf die mechanischen und thermischen Eigenschaften. Schmelzeviskositäten und Schmelzevolumenfließrate sind verbessert. Gegenüber herkömmlichen Fließverbesserern genügen außerdem geringere Mengen an Diglycerolestern, um die gewünschte Fließverbesserung zu erzielen.



Printed by Jouve, 75001 PARIS (FR)

## Beschreibung

Die vorliegende Erfindung betrifft schlagzähmodifizierte Polycarbonatzusammensetzungen mit hoher Fließfähigkeit und guter Wärmeformbeständigkeit.

Erfindungsgemäße Zusammensetzungen eignen sich für die Verwendung zur Herstellung von Formteilen, insbesondere von Gehäuseteilen im EE- und IT-Bereich (EE: Elektro/Elektronik, IT: Informationstechnik), z.B. für Elektrogehäuse/Schaltkästen oder für Rahmen von LCD-/LED-Bildschirmen sowie für Gehäuseteile von mobilen Kommunikationsendgeräten wie Smartphones, Tablets, Ultrabooks, Notebooks oder Laptops, aber auch für Navigationsgeräte, Smartwatches oder Herzfrequenzmesser sowie Elektroanwendungen in Dünnwand-Ausfertigungen, z. B. Haus- und Industrie-Vernetzungseinheiten und Smart Meter Gehäusebauteile oder Schokoladenformen.

Um die Fließfähigkeit von schlagzähmodifizierten Polycarbonaten zu verbessern, kann man das Molekulargewicht der Polycarbonatmatrix verringern. Dies führt jedoch direkt zu schlechteren mechanischen und thermischen Eigenschaften.

Herkömmlich wird auch BDP (Bisphenol A-Diphosphat) zur Fließverbesserung verwendet, und zwar in Mengen von bis zu mehr als 10 Gew.-%, um den gewünschten Effekt zu erzielen. Dadurch wird aber die Wärmeformbeständigkeit stark herabgesetzt. Auch höhere Mengen an Fettsäureestern wie beispielsweise PETS führen zu einer geringen Fließverbesserung.

Eine Aufgabe der vorliegenden Erfindung war es, schlagzähmodifizierte Polycarbonatzusammensetzungen mit einer Kombination aus verbesserter Fließfähigkeit unter weitgehender Beibehaltung der mechanischen und thermischen Eigenschaften bereitzustellen, welche die Nachteile der aus dem Stand der Technik bekannten Zusammensetzungen, z. B. unzureichendes Fließverhalten bei der Verarbeitung, nicht aufweisen.

Überraschenderweise wurde nun gefunden, dass diese Aufgabe durch eine Zusammensetzung, enthaltend

A) 80 Gew.-% bis 99 Gew.-% Polycarbonat,
B) 0,01 Gew.-% bis 3,0 Gew.-% mindestens eines Fließhilfsmittels, ausgewählt aus der Gruppe der Diglycerolester,
C) 0,2 Gew.-% bis 7 Gew.-% eines Schlagzähmodifikators,
D) 0,0 Gew.-% bis 1,0 Gew.-% eines Thermostabilisators,
E) 0,0 Gew.-% bis 10,0 Gew.-% ein oder mehrere weitere Additive,

wobei die Zusammensetzung frei von Flammschutzmittel ist,
gelöst wird.

Erfindungsgemäß bevorzugte Zusammensetzungen sind frei von Bornitrid und/oder frei von Glasfasern, Carbonfasern und Carbon-Nanotubes, bevorzugt frei von Bornitrid und von Glasfasern, Carbonfasern und Carbon-Nanotubes.

Besonders bevorzugte Zusammensetzungen enthalten gar keine weiteren Komponenten, sondern die Komponenten A) bis E) ergänzen sich zu 100 Gew.-%.

Bevorzugte erfindungsgemäße Zusammensetzungen sind solche, bestehend aus

A) 80 Gew.-% bis 97 Gew.-% Polycarbonat,
B) 0,2 Gew.-% bis 2,0 Gew.-% mindestens eines Fließhilfsmittels, ausgewählt aus der Gruppe der Diglycerolester,
C) 0,2 Gew.-% bis 7 Gew.-% eines Schlagzähmodifikators,
D) 0,0 Gew.-% bis 1,0 Gew.-% eines Thermostabilisators,
E) 0,0 Gew.-% bis 10,0 Gew.-% ein oder mehrerer weiterer Additive, ausgewählt aus der Gruppe, bestehend aus Entformungsmitteln, Antioxidantien, UV-Absorbern, Antistatika, Farbmitteln, Ruß, Farbstoffen, Titandioxid, Silikate, Talk und/oder Bariumsulfat.

Überraschenderweise genügen bereits relativ geringe Mengen des Diglycerolesters, um die Fließfähigkeit bemerkenswert zu verbessern. Entsprechend ist der Einfluss auf die thermischen Eigenschaften, beispielsweise die Wärmeformbeständigkeit, gering.

Die erfindungsgemäßen Zusammensetzungen zeichnen sich durch gute mechanische Eigenschaften, insbesondere eine gute Tieftemperaturzähigkeit, und sehr gutes rheologisches Verhalten (leicht fließend) und hohe Wärmeformbeständigkeiten (Vicat-Temperatur) aus.

Erfindungsgemäß bevorzugt sind solche Zusammensetzungen, die neben dem Schlagzähmodifikator noch mindestens ein Additiv aus der Gruppe der Entformungsmittel oder Thermostabilisatoren enthalten.

Die einzelnen Bestandteile der erfindungsgemäßen Zusammensetzungen sind im Folgenden noch näher erläutert:

**Komponente A**

Polycarbonate im Sinne der vorliegenden Erfindung sind sowohl Homopolycarbonate als auch Copolycarbonate; die Polycarbonate können in bekannter Weise linear oder verzweigt sein. Erfindungsgemäß können auch Mischungen von Polycarbonaten verwendet werden.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit $C_1$- bis $C_{30}$-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%,

bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Beispielsweise wird bei Glasfaser-gefüllten Zusammensetzungen vorzugsweise eine Mischung aus den aromatischen Polycarbonaten A1 und A2 eingesetzt mit den folgenden Eigenschaften:

Die Menge des aromatischen Polycarbonats A1 beträgt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis Bisphenol A mit einer bevorzugten Schmelze-Volumenfließrate MVR von 7 bis 15 $cm^3$/10 min, weiter bevorzugt mit einer Schmelze-Volumenfließrate MVR von 8 bis 12 $cm^3$/10 min und besonders bevorzugt mit einer Schmelze-Volumenfließrate MVR von 8 bis 11 $cm^3$/10 min, bestimmt gemäß ISO 1133 (Prüftemperatur 300°C, Masse 1,2 kg, DIN EN ISO 1133-1:2012-03), ist.

Die Menge des pulverförmigen aromatischen Polycarbonats A2 beträgt, bezogen auf die Gesamtmenge an Polycarbonat, 3,0 bis 12,0 Gew.-%, bevorzugt 4,0 bis 11,0 Gew.-%, besonders bevorzugt 4,0 bis 10,0 Gew.-%, wobei dieses aromatische Polycarbonat bevorzugt auf Basis von Bisphenol A mit einer bevorzugten Schmelze-Volumenfließrate MVR von 3 bis 8 $cm^3$/10 min, weiter bevorzugt mit einer Schmelze-Volumenfließrate MVR von 4 bis 7 $cm^3$/10 min, und besonders bevorzugt mit einer Schmelze-Volumenfließrate MVR von 6 $cm^3$/10 min, bestimmt gemäß ISO 1133 (Prüftemperatur 300°C, Masse 1,2 kg, DIN EN ISO 1133-1:2012-03), ist.

In erfindungsgemäßen Zusammensetzungen werden 80 bis 99 Gew.-%, ganz besonders bevorzugt 94 bis 97 Gew.-% aromatisches Polycarbonat eingesetzt.

Komponente B

Die verwendeten Fließhilfsmittel D sind Ester von Carbonsäuren mit Diglycerol. Dabei sind Ester auf Basis verschiedener Carbonsäuren geeignet. Auch können unterschiedliche Isomere von Diglycerol Basis für die Ester bilden. Neben Monoestern können auch Mehrfachester von Diglycerol eingesetzt werden. Anstelle von Reinverbindungen können auch Gemische verwendet werden.

Isomere von Diglycerol, welche die Basis für die erfindungsgemäß eingesetzten Diglycerolester bilden, sind die folgenden:

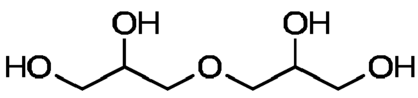

α,α-Diglycerol

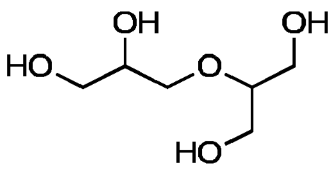

α,β-Diglycerol

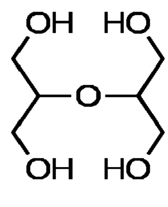

β,β-Diglycerol

Für die erfindungsgemäß verwendeten Diglycerolester können solche Isomere dieser Formeln eingesetzt werden, die einfach oder mehrfach verestert sind. Als Fließhilfsmittel einsetzbare Gemische bestehen auch aus den Diglyceroledukten sowie daraus abgeleiteten Esterendprodukten, beispielweise mit den Molekulargewichten 348 g/mol (Monolaurylester) oder 530 g/mol (Dilaurylester).

Die erfindungsgemäß in der Zusammensetzung enthaltenen Diglycerolester leiten sich vorzugsweise von gesättigten oder ungesättigten Monocarbonsäuren mit einer Kettenlänge von 6 bis 30 C-Atomen ab. Geeignete Monocarbonsäuren sind beispielsweise Caprylsäure ($C_7H_{15}COOH$, Octansäure), Caprinsäure ($C_9H_{19}COOH$, Decansäure), Laurinsäure ($C_{11}H_{23}COOH$, Dodecansäure), Myristinsäure ($C_{13}H_{27}COOH$, Tetradecansäure), Palmitinsäure ($C_{15}H_{31}COOH$, Hexadecansäure), Margarinsäure ($C_{16}H_{33}COOH$, Heptadecansäure), Stearinsäure ($C_{17}H_{35}COOH$, Octadecansäure), Arachinsäure ($C_{19}H_{39}COOH$, Eicosansäure), Behensäure ($C_{21}H_{43}COOH$, Docosansäure), Lignocerinsäure ($C_{23}H_{47}COOH$, Tetracosansäure), Palmitoleinsäure ($C_{15}H_{29}COOH$, (9Z)-Hexadeca-9-ensäure), Petroselinsäure ($C_{17}H_{33}COOH$, (6Z)-Octadeca-6-ensäure), Elaidinsäure ($C_{17}H_{33}COOH$, (9E)-Octadeca-9-ensäure), Linolsäure

($C_{17}H_{31}COOH$, (9Z,12Z)-Octadeca-9,12-diensäure), alpha- oder gamma-Linolensäure ($C_{17}H_{29}COOH$, (9Z,12Z,15Z)-Octadeca-9,12,15-triensäure und (6Z,9Z,12Z)-Octadeca-6,9,12-triensäure), Arachidonsäure ($C_{19}H_{31}COOH$, (5Z,8Z,11Z,14Z)-Eicosa-5,8,11,14-tetraensäure), Timnodonsäure ($C_{19}H_{29}COOH$, (5Z,8Z,11Z,14Z,17Z)-Eicosa-5,8,11,14,17-pentaensäure) und Cervonsäure ($C_{21}H_{31}COOH$, (4Z,7Z,10Z,13Z,16Z,19Z)-Docosa-4,7,10,13,16,19-hexaensäure). Besonders bevorzugt sind Laurinsäure, Palmitinsäure und/oder Stearinsäure.

Als Diglycerolester ist besonders bevorzugt mindestens ein Ester der Formel (I)

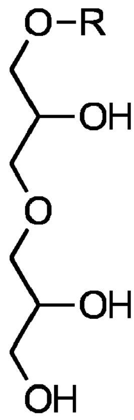
(I)

mit R = $COC_nH_{2n+1}$ und/oder R = COR',
wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist,
enthalten.

Dabei ist n bevorzugt eine ganze Zahl von 6-24, so dass $C_nH_{2n+1}$ beispielsweise n-Hexyl, n-Heptyl, n-Octyl, n-Nonyl, n-Decyl, n-Dodecyl, n-Tridecyl, n-Tetradecyl, n-Hexadecyl oder n-Octadecyl ist. Weiter bevorzugt ist n = 8 bis 18, besonders bevorzugt 10 bis 16, ganz besonders bevorzugt 12 (Diglycerolmonolaurat-Isomer mit dem Molekulargewicht 348 g/mol, welches als Hauptprodukt in einem Gemisch besonders bevorzugt ist). Die vorgenannten Estergruppierungen liegen erfindungsgemäß bevorzugt auch bei den anderen Isomeren des Diglycerols vor.

Es kann sich demzufolge auch um ein Gemisch verschiedener Diglycerolester handeln.

Bevorzugt eingesetzte Diglycerolester weisen einen HLB-Wert von mindestens 6, besonders bevorzugt 6 bis 12 auf, wobei unter dem HLB-Wert die sog. "hydrophilic-lipophilic balance" verstanden wird, die gemäß der Methode nach Griffin wie folgt berechnet wird:

$$HLB = 20 \times (1 - M_{lipophil}/M),$$

wobei $M_{lipophil}$ die Molmasse des lipophilen Anteils des Diglycerolesters ist und M die Molmasse des Diglycerolesters.

Die Menge an Diglycerolester beträgt 0,01 bis 3,0 Gew.-%, bevorzugt 0,20 bis 2,0 Gew.-%, weiter bevorzugt 0,15 bis 1,50 Gew.-% noch weiter bevorzugt 0,10 bis 1,0 Gew.-%, ganz besonders bevorzugt 0,10 bis 0,5 Gew.-%.

Komponente C

Bei Komponente C handelt es sich um mindestens einen Schlagzähmodifikator.

Bevorzugt ist Komponente C ein oder mehrere Pfropfpolymerisat(e) von

C.1 5 bis 95, vorzugsweise 30 bis 90 Gew.-%, wenigstens eines Vinylmonomeren auf

C.2 95 bis 5, vorzugsweise 70 bis 10 Gew.-% wenigstens einer Pfropfgrundlage, ausgewählt aus der Gruppe, bestehend aus Dienkautschuken, EP(D)M-Kautschuken (d.h. solchen auf Basis Ethylen/Propylen und gegebenenfalls Dien), Acrylat-, Polyurethan-, Silikon-, Silikonacrylat-, Chloropren und/oder Ethylen/Vinylacetat-Kautschuken.

Die Pfropfgrundlage C.2 hat bevorzugt eine mittlere Teilchengröße ($d_5$o-Wert) von 0,05 bis 10 $\mu$m, vorzugsweise 0,1 bis 5 $\mu$m, besonders bevorzugt 0,2 bis 0,4 $\mu$m.

Monomere C.1 sind vorzugsweise Gemische aus

C.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-($C_1$-bis -$C_8$)-Alkylester, wie Methylmethacrylat, Ethylmethacrylat), und

C.1.2 1 bis 50 Gew.-Teilen Vinylcyaniden (ungesättigte Nitrile wie Acrylnitril und Methacrylnitril) und/oder (Meth)Acrylsäure-($C_1$- bis -$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere C.1.1 sind ausgewählt aus mindestens einem der Monomere Styrol, α-Methylstyrol und Methylmethacrylat. Bevorzugte Monomere C.1.2 sind ausgewählt aus mindestens einem der Monomere Acrylnitril, Maleinsäureanhydrid und Methylmethacrylat. Besonders bevorzugte Monomere sind C.1.1 Styrol und C.1.2 Acrylnitril.

Bevorzugte Pfropfgrundlagen C.2 sind Silikonacrylatkautschuke, Dienkautschuke (beispielsweise auf Basis Butadien und Isopren) oder Gemische von Dienkautschuken. Unter Dienkautschuken im erfindungsgemäßen Sinne sind auch Copolymerisate von Dienkautschuken oder deren Gemischen mit weiteren copolymerisierbaren Monomeren (z.B. gemäß C.1.1 und C.1.2) zu verstehen.

Die Pfropfgrundlagen C.2 weisen im Allgemeinen eine Glasübergangstemperatur von < 10°C, vorzugsweise < 0°C, besonders bevorzugt < -10°C auf.

Der Gelanteil der Pfropfgrundlage C.2 beträgt vorzugsweise mindestens 20 Gew.-%, im Falle von im Emulsionspolymerisation hergestellten Pfropfgrundlagen C.2 vorzugsweise mindestens 40 Gew.-% (in Toluol gemessen).

Vorzugsweise weist das Pfropfpolymerisat aus den Komponenten C.1 und C.2 eine Kern-Schale-Struktur auf, wobei die Komponente C.1 die Schale bildet (auch als Hülle bezeichnet) und die Komponente C.2 den Kern ausbildet (siehe bspw. Ullmann's Encyclopedia of Industrial Chemistry, VCH-Verlag, Vol. A21, 1992, Seite 635 und Seite 656).

Die Pfropfcopolymerisate C werden durch radikalische Polymerisation, z.B. durch Emulsions-, Suspensions-, Lösungs- oder Massepolymerisation, vorzugsweise durch Emulsions- oder Massepolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß C.2 der Polymerisate C sind vorzugsweise Polymerisate aus Acrylsäurealkylestern, gegebenenfalls mit bis zu 40 Gew.-%, bezogen auf C.2 anderen polymerisierbaren, ethylenisch ungesättigten Monomeren. Zu den bevorzugten polymerisierbaren Acrylsäureestern gehören $C_1$- bis $C_8$-Alkylester, beispielsweise Methyl-, Ethyl-, Butyl-, n-Octyl- und 2-Ethylhexylester; Halogenalkylester, vorzugsweise Halogen-$C_1$- bis -$C_8$-alkylester, wie Chlorethylacrylat sowie Mischungen dieser Monomere.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage C.2. Bei cyclischen vernetzenden Monomeren mit mindestens drei ethylenisch ungesättigten Gruppen ist es vorteilhaft, die Menge auf unter 1 Gew.-% der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, α-Methylstyrol, Acrylamide, Vinyl-$C_1$- bis -$C_6$-alkylether, Methylmethacrylat, Butadien. Bevorzugte Acrylatkautschuke als Pfropfgrundlage C.2 sind Emulsionspolymerisate, die einen Gelgehalt von mindestens 60 Gew.-% aufweisen.

Geeignete Silikonkautschuke gemäß C.2. können durch Emulsionspolymerisation hergestellt werden, wie beispielsweise in US-A 2891920 und US-A 3294725 beschrieben. Weitere geeignete Pfropfgrundlagen gemäß C.2 sind Silikonkautschuke mit pfropfaktiven Stellen, wie sie in den DE-A1 3 704 657, DE-A1 3 704 655, DE-A1 3 631 540 und DE-A1 3 631 539 beschrieben werden.

Als Pfropfgrundlagen C.2 sind erfindungsgemäß auch Silikonacrylat-Kautschuke geeignet. Diese Silikonacrylat-Kautschuke sind Komposit-Kautschuke mit pfropfaktiven Stellen, enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen. Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigkeit der fertigen Harzzusammensetzung nachteilig beeinflusst).

Silikonacrylat-Kautschuke sind bekannt und beispielsweise beschrieben in US-A 5,807,914, EP-A2 430134 und US-A 4888388. Vorzugsweise eingesetzt wird ein in Emulsionspolymerisation hergestelltes Pfropfpolymer mit C.1 Methylmetacrylat und C.2 Silikonacrylat-Komposit-Kautschuk.

Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Die Glasübergangstemperatur wird mittels dynamischer Differenz-Thermoanalyse (DSC) gemäß der Norm DIN EN 61006 (DIN EN 61006:2004-11) bei einer Heizrate von 10 K/min mit Definition der $T_g$ als Mittelpunkttemperatur (Tangentenmethode) bestimmt.

**Komponente D**

Als Thermostabilisatoren werden bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Trisisooctylphosphat, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228-PC) und/oder Bis-(2,6-di-tert-butyl-4-methylphenyl)-pentaerythritoldiphosphit (ADK STAB PEP-36) eingesetzt. Sofern ein Thermostabilisator eingesetzt wird, wird er allein oder im Gemisch (z. B. Irganox® B900 (Gemisch aus Irgafos® 168 und Irganox® 1076 im Verhältnis 1:3) oder Doverphos® S-9228-PC mit Irganox® B900 bzw. Irganox® 1076) eingesetzt. Besonders bevorzugt wird Triisooctylphosphat eingesetzt.

Sofern ein Thermostabilisator eingesetzt wird, werden üblicherweise 0,001 bis 1,0 Gew.-% Thermostabilisator eingesetzt. Komponente D wird bevorzugt in Mengen von 0,003 bis 0,5 Gew.-%, besonders bevorzugt in Mengen von 0,1 bis 0,2 Gew.-% eingesetzt.

**Komponente E**

Zusätzlich sind optional bis zu 10,0 Gew.-%, bevorzugt 0,10 bis 8,0 Gew.-%, besonders bevorzugt 0,2 bis 3,0 Gew.-% sonstige übliche Additive ("weitere Additive") enthalten. Die Gruppe der weiteren Additive umfasst beispielsweise Entformungsmittel und/oder Farbmittel, aber keine Thermostabilisatoren, da diese bereits als Komponente D beschrieben sind. "Weitere Additive" sind auch keine Fließhilfsmittel aus der Gruppe der Diglycerolester, da diese bereits als Komponente B erfasst sind. Die Gruppe der weiteren Additive umfasst insbesondere auch kein Bornitrid, Glasfasern, Carbonfasern und Carbon-Nanotubes.

Solche Additive, wie sie üblicherweise bei Polycarbonaten zugesetzt werden, sind insbesondere die in EP-A 0 839 623, WO-A 96/15102, EP-A 0 500 496 oder "Plastics Additives Handbook", Hans Zweifel, 5th Edition 2000, Hanser Verlag, München beschriebenen Antioxidantien, UV-Absorber, Antistatika, Farbmittel wie Pigmente, auch anorganische Pigmente, Ruß und/oder Farbstoffe, anorganischen Füllstoffe wie Titandioxid, Silikate, Talk und/oder Bariumsulfat in den für Polycarbonat üblichen Mengen. Diese Additive können einzeln oder auch im Gemisch zugesetzt werden.

Bevorzugte Additive sind spezielle UV-Absorber, die eine möglichst geringe Transmission unterhalb 400 nm und eine möglichst hohe Transmission oberhalb von 400 nm besitzen. Benzotriazole, Triazine, Benzophenone und/oder arylierte Cyanoacrylate sind für den Einsatz in der erfindungsgemäßen Zusammensetzung besonders geeignete Ultraviolett-Absorber.

Hierzu gehören Hydroxy-Benzotriazole, wie 2-(3',5'-Bis-(1,1-dimethylbenzyl)-2'-hydroxy-phenyl)-benzotriazol (Tinuvin® 234, BASF, Ludwigshafen), 2-(2'-Hydroxy-5'-(tert.-octyl)-phenyl)-benzotriazol (Tinuvin® 329, BASF, Ludwigshafen),), Bis-(3-(2H-benztriazolyl)-2-hydroxy-5-tert.-octyl)methan (Tinuvin® 360, BASF, Ludwigshafen), 2-(4,6-Diphenyl-1,3,5-triazin-2-yl)-5-(hexyloxy)-phenol (Tinuvin® 1577, BASF, Ludwigshafen), sowie Benzophenone wie 2,4-Dihydroxybenzophenon (Chimasorb® 22 , BASF, Ludwigshafen) und 2-Hydroxy-4-(octyloxy)-benzophenon (Chimassorb® 81, BASF, Ludwigshafen), 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazin (Tinuvin® 1600, BASF, Ludwigshafen), Tetraethyl-2,2'-(1,4-phenylen-dimethyliden)-bismalonat (Hostavin® B-Cap, Clariant AG) oder N-(2-Ethoxyphenyl)-N'-(2-ethylphenyl)-ethandiamid (Tinuvin® 312, CAS-Nr. 23949-66-8, BASF, Ludwigshafen).

Besonders bevorzugte UV-Absorber sind Tinuvin® 360, Tinuvin® 329 und/oder Tinuvin® 312, ganz besonders bevorzugt sind Tinuvin® 329 und Tinuvin® 312.

Es können auch Mischungen dieser Ultraviolett-Absorber eingesetzt werden.

Bevorzugt enthält die Zusammensetzung Ultraviolett-Absorber in einer Menge bis zu 0,8 Gew.-%, bevorzugt 0,05 Gew.-% bis 0,5 Gew.-%, weiter bevorzugt 0,1 Gew.-% bis 0,4 Gew.-%, bezogen auf die Gesamtzusammensetzung.

Bevorzugt enthält die Zusammensetzung mindestens ein Entformungsmittel oder einen Thermostabilisator.

Die Herstellung der erfindungsgemäßen Polymer-Zusammensetzungen, enthaltend die Komponenten A bis E, ggf. ohne D und/oder E, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis E verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis E der erfindungsgemäßen Zusammensetzungen durch bekannte Verfahren oder als Masterbatch in das Polycarbonat eingebracht werden.

Die Verwendung von Masterbatchen ist zum Einbringen der Komponenten B bis E, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabenderoder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die Herstellung der Kunststoffformteile erfolgt vorzugsweise durch Spritzguss.

Erfindungsgemäße Zusammensetzungen in Form von Polycarbonatzusammensetzungen sind zur Herstellung von Mehrschichtsystemen geeignet. Hierbei wird die erfindungsgemäße Polycarbonatzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Erfindungsgemäße Zusammensetzungen sind zur Herstellung von Rahmenbauteilen im EE (Elektro/Elektronik)- und IT-Bereich geeignet Solche Anwendungen sind beispielsweise Bildschirme oder Gehäuse, etwa für Ultrabooks oder Rahmen für LED-Display-Technologien, z.B. OLED-Displays oder LCD-Displays oder auch für E-Ink-Geräte. Weitere Anwendungsfelder sind Gehäuseteile von mobilen Kommunikationsendgeräten, wie Smartphones, Tablets, Ultrabooks, Notebooks oder Laptops, aber auch Navigationsgeräte, Smartwatches oder Herzfrequenzmesser, sowie Elektroanwendungen in Dünnwand-Ausfertigungen, z. B. Haus- und Industrie-Vernetzungseinheiten und Smart Meter Gehäusebauteile oder Schokoladenformen oder sonstige Lebensmittelkontaktanwendungen.

## Beispiele

### 1. Beschreibung der Rohstoffe und Prüfmethoden

Die erfindungsgemäßen Polycarbonatzusammensetzungen zu den folgenden Beispielen wurden auf einem Extruder ZE 25 der Fa. Berstorff mit einem Durchsatz von 10 kg/h hergestellt. Die Schmelzetemperatur betrug 275 °C.

**Komponente A-1:** Lineares Polycarbonat auf Basis von Bisphenol A mit einer Schmelze-Volumenfließrate MVR von 12,5 $cm^3$/10 min (gemäß ISO 1133, bei einer Prüftemperatur 300°C und 1,2 kg Belastung, DIN EN ISO 1133-1:2012-03).

**Komponente A-2:** Lineares Polycarbonat auf Basis von Bisphenol A mit einer Schmelze-Volumenfließrate MVR von 9,5 $cm^3$/10 min (gemäß ISO 1133, bei einer Prüftemperatur 300°C und 1,2 kg Belastung, DIN EN ISO 1133-1:2012-03).

**Komponente A-3:** Lineares Polycarbonat auf Basis von Bisphenol A mit einer Schmelze-Volumenfließrate MVR

von 16,5 $cm^3$/10 min (gemäß ISO 1133, bei einer Prüftemperatur 250°C und 2,16 kg Belastung, DIN EN ISO 1133-1:2012-03).

**Komponente A-4:** Lineares Polycarbonat in Pulverform auf Basis von Bisphenol A mit einer Schmelze-Volumenfließrate MVR von 19 $cm^3$/10 min (gemäß ISO 1133, bei einer Prüftemperatur von 300°C und 1,2 kg Belastung, DIN EN ISO 1133-1:2012-03).

**Komponente A-5:** Lineares Polycarbonat in Pulverform auf Basis von Bisphenol A mit einer Schmelze-Volumenfließrate MVR von 6 $cm^3$/10 min (gemäß ISO 1133, bei einer Prüftemperatur von 300°C und 1,2 kg Belastung, DIN EN ISO 1133-1:2012-03).

**Komponente B-1:** Pentareythrittetrastearat (PETS) der Firma Emery Oleochemicals.

**Komponente B-2:** Poem DL-100 (Diglycerolmonolaurat) der Fa. Riken Vitamin als Fließhilfsmittel.

**Komponente C-1:** MBS-Schlagzähmodifikator (MBS: Methacrylat-Butadien-Styrol) Paraloid® EXL2650 der Firma DOW.

**Komponente C-2:** Acrylischer Kern/Schale-Schlagzähmodifikator, basierend auf Butylacrylat-Kautschuk; Paraloid® EXL2300 der Firma DOW.

**Komponente C-3:** Acrylischer Schlagzähmodifikator Durastrength® D440 der Firma Arkema.

**Komponente C-4:** Silikon-Acrylat-Kautschuk Metablen S-2001 der Firma Mitsubishi Rayon.

**Komponente D:** Triisoctylphosphat (TOF) der Firma Lanxess AG.

**Komponente E:** Hostanox® PEPQ der Firma Clariant als Antioxidant.

Die Kerbschlagzähigkeit nach Charpy wurde nach ISO 7391/180A an einseitig angespritzten Prüfstäben der Dimension 80 mm x 10 mm x 3 mm bei Raumtemperatur gemessen.

Die Vicat-Erweichungstemperatur VST/B50 als Maß für die Wärmeformbeständigkeit wurde gemäß ISO 306 an Prüfkörpern der Abmessung 80 mm x 10 mm x 4 mm mit einer Stempellast von 50 N und einer Aufheizgeschwindigkeit von 50°C/h mit dem Gerät Coesfeld Eco 2920 der Firma Coesfeld Materialtest bestimmt.

Die Bestimmung des Schmelze-Volumenfließrate (MVR) erfolgte nach ISO 1133 (bei einer Prüftemperatur von 300 °C, Masse 1,2 kg, DIN EN ISO 1133-1:2012-03) mit dem Gerät Zwick 4106 der Firma Zwick Roell.

Die Bestimmung der Schmelzeviskositäten erfolgte nach ISO 11443 ((Kegel-Platte-Anordnung, ISO 11443:2014-04)).

**Tabelle 1**

| Rezeptur | | V1 | B1 | B2 |
|---|---|---|---|---|
| A-1 | [Gew.-%] | 93,00 | 93,00 | 93,00 |
| A-5 | [Gew.-%] | 3,40 | 3,79 | 3,59 |
| C-1 | [Gew.-%] | 3,00 | 3,00 | 3,00 |
| B-1 | [Gew.-%] | 0,60 | - | - |
| B-2 | [Gew.-%] | - | 0,20 | 0,40 |
| D | [Gew.-%] | - | 0,01 | 0,01 |
| | | | | |
| MVR | [ml/10 min] | 10,2 | 15,6 | 26,3 |
| IMVR20’ | [ml/10 min] | 11,1 | 17,2 | 27,0 |
| Delta MVR/IMVR20’ | | 0,9 | 1,6 | 0,7 |
| Vicat VSTB 50 | [°C] | 142,9 | 143,9 | 141,2 |

(fortgesetzt)

| Rezeptur | | V1 | B1 | B2 |
|---|---|---|---|---|
| Kerbschlagzähigkeit ISO7391, 3 mm | | | | |
| 23°C | [kJ/m$^2$] | 60 | 58 | 52 |
| | | zäh | zäh | zäh |
| -20°C | [kJ/m$^2$] | 54 zäh | 52 zäh | 9x45 zäh 1x24 spröde |
| -30°C | [kJ/m$^2$] | - | - | 2x33 zäh 8x25 spröde |
| -40°C | [kJ/m$^2$] | 50 zäh | 47 zäh | 23 spröde |

Die Beispiele B1 und B2 weisen deutlich höhere MVR-Werte als das Vergleichsbeispiel V1, welches den Digylcerolester nicht enthält, auf. Weiterhin ist ersichtlich, dass die geringeren Mengen an Diglycerolester in den Beispielen B1 und B2 zu einer deutlich besseren Fließfähigkeit führen als die hohe Menge an PETS (Komponente B-1) in V1. Die Vicat-Temperaturen verbleiben auf hohem Niveau.

**Tabelle 2**

| **Rezeptur** | | V2 | B3 | B4 | B5 |
|---|---|---|---|---|---|
| A-2 | [Gew.-%] | 93,00 | 93,00 | 93,00 | 93,00 |
| A-5 | [Gew.-%] | 2,89 | 2,79 | 2,69 | 2,59 |
| E | [Gew.-%] | 0,10 | 0,10 | 0,10 | 0,10 |
| C-2 | [Gew.-%] | 4,00 | 4,00 | 4,00 | 4,00 |
| B-2 | [Gew.-%] | | 0,10 | 0,20 | 0,30 |
| D | [Gew.-%] | 0,01 | 0,01 | 0,01 | 0,01 |
| | | | | | |
| MVR | [ml/10 min] | 8,3 | 16,2 | 45,4 | 45,6 |
| IMVR20’ | [ml/10 min] | 8,5 | 17,6 | 40,8 | 47,0 |
| Delta MVR/IMVR20’ | | 0,2 | 1,4 | -4,6 | 1,4 |
| Vicat VSTB 50 | [°C] | 144,5 | 143,8 | 143,7 | 142,3 |
| Schmelzeviskosität bei 280°C | | | | | |
| eta 50 | [Pa·s] | 912 | 905 | 669 | 576 |
| eta 100 | [Pa·s] | 862 | 833 | 617 | 569 |
| eta 200 | [Pa·s] | 785 | 759 | 591 | 524 |
| eta 500 | [Pa·s] | 617 | 600 | 488 | 449 |
| eta 1000 | [Pa·s] | 451 | 444 | 382 | 350 |
| eta 1500 | [Pa·s] | 358 | 354 | 319 | 290 |
| eta 5000 | [Pa·s] | 167 | 158 | 149 | 137 |
| Schmelzeviskosität bei 300°C | | | | | |
| eta 50 | [Pa·s] | 467 | 414 | 316 | |
| eta 100 | [Pa·s] | 458 | 408 | 293 | |
| eta 200 | [Pa·s] | 434 | 393 | 280 | 277 |
| eta 500 | [Pa·s] | 374 | 341 | 267 | 250 |
| eta 1000 | [Pa·s] | 303 | 281 | 225 | 217 |
| eta 1500 | [Pa·s] | 255 | 239 | 201 | 192 |

(fortgesetzt)

| Rezeptur | | V2 | B3 | B4 | B5 |
|---|---|---|---|---|---|
| eta 5000 | [Pa·s] | 125 | 120 | 108 | 103 |
| Schmelzeviskosität bei 320°C | | | | | |
| eta 50 | [Pa·s] | 254 | 259 | 195 | |
| eta 100 | [Pa·s] | 243 | 254 | 193 | |
| eta 200 | [Pa·s] | 238 | 253 | 187 | |
| eta 500 | [Pa·s] | 216 | 231 | 174 | 141 |
| eta 1000 | [Pa·s] | 185 | 198 | 156 | 123 |
| eta 1500 | [Pa·s] | 162 | 175 | 140 | 113 |
| eta 5000 | [Pa·s] | 80 | 98 | 88 | 77 |
| Kerbschlagzähigkeit ISO7391, 3 mm | | | | | |
| 23°C | [kJ/m$^2$] | 64 zäh | 63 zäh | 64 zäh | 63 zäh |
| -20°C | [kJ/m$^2$] | 57 zäh | 56 zäh | 57 zäh | 57 zäh |
| -30°C | [kJ/m$^2$] | 56 zäh | 54 zäh | 9x64 zäh 1x26 spröde | 55 zäh |
| -40°C | [kJ/m$^2$] | 21 spröde | 19 spröde | 20 spröde | 18 spröde |

Die Beispiele B3 bis B5 weisen deutlich höhere MVR-Werte als das Vergleichsbeispiel V2, welches den Digylcerolester nicht enthält, auf. Außerdem sind die Schmelzeviskositäten über den gemessen Scherbereich bei allen Messtemperaturen deutlich herabgesetzt. Die Vicat-Temperaturen verbleiben auf hohem Niveau.

**Tabelle 3**

| Rezeptur | | V3 | V4 | B6 | B7 |
|---|---|---|---|---|---|
| A-3 | [Gew.-%] | 70,00 | 70,00 | 70,00 | 70,00 |
| A-1 | [Gew.-%] | 23,00 | 23,00 | 23,00 | 23,00 |
| A-4 | [Gew.-%] | 4,59 | 4,99 | 4,89 | 4,79 |
| B-1 | [Gew.-%] | 0,40 | | | |
| C-3 | [Gew.-%] | 2,00 | 2,00 | 2,00 | 2,00 |
| B-2 | [Gew.-%] | | | 0,10 | 0,20 |
| D | [Gew.-%] | 0,01 | 0,01 | 0,01 | 0,01 |
| | | | | | |
| MVR | [ml/10 min] | 39,9 | 36,9 | 49,9 | 61,2 |
| IMVR20’ | [ml/10 min] | 43,5 | 36,1 | 51,3 | 64,3 |
| Delta MVR/IMVR20’ | | 3,6 | -0,8 | 1,4 | 3,1 |
| Vicat VSTB 50 | [°C] | 141,8 | 143,8 | 143,3 | 142 |
| Kerbschlagzähigkeit ISO7391, 3 mm | | | | | |
| 23°C | [kJ/m$^2$] | 49 zäh | 50 zäh | 48 zäh | 50 zäh |
| 10°C | [kJ/m$^2$] | 46 zäh | - | | 46 zäh |
| 0°C | [kJ/m$^2$] | 5x44 zäh 5x25 spröde | 44 zäh | 44 zäh | 7x43 zäh 3x27 spröde |

(fortgesetzt)

| **Rezeptur** | | V3 | V4 | B6 | B7 |
|---|---|---|---|---|---|
| -10°C | [kJ/m$^2$] | 1x31 zäh 9x19 spröde | 22 spröde | 1x33 zäh 9x21 spröde | 19 spröde |
| -20°C | [kJ/m$^2$] | 17 spröde | 16 spröde | 16 spröde | 16 spröde |

Die Beispiele B6 und B7 weisen deutlich höhere MVR-Werte als die Vergleichsbeispiele V3 und V4, welche den Gylcerolester nicht enthalten, auf. Außerdem sind die Schmelzeviskositäten über den gemessen Scherbereich bei allen Messtemperaturen deutlich herabgesetzt. Die Vicat-Temperaturen verbleiben auf hohem Niveau.

**Tabelle 4**

| **Rezeptur** | | V5 | V6 | B8 | B9 | B10 |
|---|---|---|---|---|---|---|
| A-1 | [Gew.-%] | 93,00 | 93,00 | 93,00 | 93,00 | 93,00 |
| A-5 | [Gew.-%] | 1,40 | 2,00 | 1,90 | 1,70 | 1,50 |
| B-1 | [Gew.-%] | 0,60 | | | | |
| C-4 | [Gew.-%] | 5,00 | 5,00 | 5,00 | 5,00 | 5,00 |
| B-2 | [Gew.-%] | | | 0,10 | 0,30 | 0,50 |
| | | | | | | |
| MVR | [ml/10 min] | 11,5 | 10,9 | 11,6 | 13,8 | 14,7 |
| IMVR20’ | [ml/10 min] | 12,5 | 12,0 | 12,7 | 14,8 | 19,7 |
| Delta MVR/IMVR20’ | | 1,0 | 1,1 | 1,1 | 1,0 | 5,0 |
| Vicat VSTB 50 | [°C] | 139,9 | 143,7 | 142,8 | 141,1 | 139,6 |
| Schmelzeviskosität bei 280°C | | | | | | |
| eta 50 | [Pa·s] | 617 | 622 | 661 | 604 | 565 |
| eta 100 | [Pa·s] | 599 | 617 | 621 | 587 | 543 |
| eta 200 | [Pa·s] | 546 | 577 | 567 | 537 | 499 |
| eta 500 | [Pa·s] | 438 | 464 | 458 | 438 | 405 |
| eta 1000 | [Pa·s] | 338 | 361 | 356 | 341 | 318 |
| eta 1500 | [Pa·s] | 279 | 297 | 293 | 282 | 262 |
| eta 5000 | [Pa·s] | 132 | 140 | 138 | 135 | 129 |
| Schmelzeviskosität bei 300°C | | | | | | |
| eta 50 | [Pa·s] | 312 | 335 | 333 | 321 | 284 |
| eta 100 | [Pa·s] | 309 | 331 | 324 | 312 | 275 |
| eta 200 | [Pa·s] | 290 | 310 | 309 | 296 | 265 |
| eta 500 | [Pa·s] | 254 | 272 | 272 | 261 | 234 |
| eta 1000 | [Pa·s] | 213 | 227 | 227 | 219 | 201 |
| eta 1500 | [Pa·s] | 186 | 198 | 198 | 191 | 174 |
| eta 5000 | [Pa·s] | 102 | 107 | 107 | 104 | 97 |
| Schmelzeviskosität bei 320°C | | | | | | |

(fortgesetzt)

| Rezeptur | | V5 | V6 | B8 | B9 | B10 |
|---|---|---|---|---|---|---|
| eta 50 | [Pa·s] | 196 | 207 | 199 | 192 | 177 |
| eta 100 | [Pa·s] | 194 | 205 | 196 | 190 | 173 |
| eta 200 | [Pa·s] | 186 | 197 | 189 | 182 | 164 |
| eta 500 | [Pa·s] | 167 | 178 | 169 | 164 | 148 |
| eta 1000 | [Pa·s] | 146 | 156 | 147 | 145 | 132 |
| eta 1500 | [Pa·s] | 131 | 139 | 133 | 131 | 119 |
| eta 5000 | [Pa·s] | 80 | 84 | 81 | 80 | 75 |
| Kerbschlagzähigkeit ISO7391 3 | | | | | | |
| mm | | | | | | |
| 23°C | [kJ/m$^2$] | 64 zäh | 63 zäh | 62 zäh | 61 zäh | 61 zäh |
| -20°C | [kJ/m$^2$] | 57 zäh | 55 zäh | 54 zäh | 53 zäh | 53 zäh |
| -30°C | [kJ/m$^2$] | 45 zäh | 48 zäh | 45z zäh | 9x40 zäh 1x28 spröde | 8x33 zäh 2x27 spröde |

Die Beispiele B8 bis B10 weisen deutlich höhere MVR-Werte als die Vergleichsbeispiele V5 und V6, welche den Glycerolester nicht enthalten, auf. Außerdem sind die Schmelzeviskositäten über den gemessen Scherbereich bei allen Messtemperaturen deutlich herabgesetzt. Weiterhin ist ersichtlich, dass die geringeren Mengen an Diglycerolester in den Beispielen B8 bis B10 zu einer deutlich besseren Fließfähigkeit führen als die hohe Menge an PETS (Komponente B-1) in V5. Die Vicat-Temperaturen verbleiben auf hohem Niveau.

## Patentansprüche

**1.** Zusammensetzung, enthaltend

A) 80 Gew.-% bis 99 Gew.-% Polycarbonat,
B) 0,01 Gew.-% bis 3,0 Gew.-% mindestens eines Fließhilfsmittels, ausgewählt aus der Gruppe der Diglycerolester,
C) 0,2 Gew.-% bis 7 Gew.-% eines Schlagzähmodifikators,

wobei die Zusammensetzung frei von Flammschutzmittel ist.

**2.** Zusammensetzung nach Anspruch 1, **dadurch gekennzeichnet, dass** der Schlagzähmodifikator ein oder mehrere Pfropfpolymerisat(e) von

C.1 5 bis 95 Gew.-%, wenigstens eines Vinylmonomeren auf
C.2 95 bis 5 Gew.-% wenigstens einer Pfropfgrundlage, ausgewählt aus der Gruppe, bestehend aus Dienkautschuken, EP(D)M-Kautschuken (d.h. solchen auf Basis Ethylen/Propylen und gegebenenfalls Dien), Acrylat-, Polyurethan-, Silikon-, Silikonacrylat-, Chloropren und/oder Ethylen/Vinylacetat-Kautschuken,

ist.

**3.** Zusammensetzung nach Anspruch 1 oder 2, **dadurch gekennzeichnet, dass** die Zusammensetzung frei ist von Bornitrid.

**4.** Zusammensetzung nach einem der vorhergehenden Ansprüche, **dadurch gekennzeichnet, dass** die Zusammensetzungen frei ist von Glasfasern, Carbonfasern und Carbon-Nanotubes.

5. Zusammensetzung nach einem der vorhergehenden Ansprüche, **dadurch gekennzeichnet, dass** die Zusammensetzung

D) 0,003 bis 0,5 Gew.-% eines Thermostabilisators enthält.

6. Zusammensetzung nach einem der vorhergehenden Ansprüche, **dadurch gekennzeichnet, dass** 0,2 bis 1,0 Gew.-% Diglycerolester enthalten sind.

7. Zusammensetzung nach einem der vorhergehenden Ansprüche, **dadurch gekennzeichnet, dass** als Diglycerolester ein Ester der Formel (I) enthalten ist

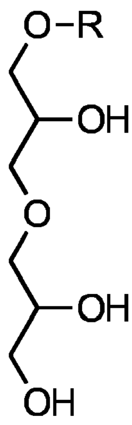
(I)

mit R = $COC_nH_{2n+1}$ und/oder R = COR',
wobei n eine ganze Zahl und R' ein verzweigter Alkylrest oder ein verzweigter oder unverzweigter Alkenylrest ist und $C_nH_{2n+1}$ ein aliphatischer, gesättigter linearer Alkylrest ist.

8. Zusammensetzung nach einem der vorhergehenden Ansprüche, **dadurch gekennzeichnet, dass** R = $COC_nH_{2n+1}$ ist, wobei n eine ganze Zahl von 6-24, bevorzugt 8 bis 18, weiter bevorzugt 10 bis 16, besonders bevorzugt 12 ist.

9. Zusammensetzung nach einem der vorhergehenden Ansprüche, **dadurch gekennzeichnet, dass** der Diglycerolester Diglycerolmonolaurylester, ggf. in Mischung mit weiteren Diglycerolestern, ist.

10. Polycarbonatzusammensetzung nach einem der vorhergehenden Ansprüche, bestehend aus C) 80 Gew.-% bis 97 Gew.-% Polycarbonat,

D) 0,2 Gew.-% bis 2,0 Gew.-% mindestens eines Fließhilfsmittels, ausgewählt aus der Gruppe der Diglycerolester,
C) 0,2 Gew.-% bis 7 Gew.-% eines Schlagzähmodifikators,
D) 0,0 Gew.-% bis 1,0 Gew.-% eines Thermostabilisators,
E) 0,0 Gew.-% bis 10,0 Gew.-% ein oder mehrerer weiterer Additive, ausgewählt aus der Gruppe, bestehend aus Entformungsmitteln, Antioxidantien, UV-Absorbern, Antistatika, Farbmitteln, Ruß, Farbstoffen, Titandioxid, Silikate, Talk und/oder Bariumsulfat.

11. Verwendung mindestens eines Diglycerolesters zur Steigerung der Schmelzevolumenfließrate, bestimmt nach DIN EN ISO 1133 bei einer Prüftemperatur von 300°C und einer Masse von 1,2 kg, von Zusammensetzungen, enthaltend 80,0 Gew.-% bis 99,0 Gew.-% Polycarbonat und 0,2 Gew.-% bis 7 Gew.-% eines Schlagzähmodifikators.

Europäisches Patentamt
European Patent Office
Office européen des brevets

# EUROPÄISCHER RECHERCHENBERICHT

Nummer der Anmeldung
EP 15 17 5791

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | JP 2011 256359 A (SUMIKA STYRON POLYCARBONATE)<br>22. Dezember 2011 (2011-12-22)<br>* Beispiele 1-7; Tabellen 2,3 *<br>* Ansprüche * | 11<br>1-10 | INV.<br>C08L69/00 |
| X<br>A | EP 0 994 155 A2 (IDEMITSU PETROCHEMICAL CO [JP]) 19. April 2000 (2000-04-19)<br>* Beispiele 1,C1,C3,C4,4; Tabelle 1 * | 11<br>1-10 | |
| A | EP 1 424 360 A1 (BAYER AG [DE])<br>2. Juni 2004 (2004-06-02)<br>* Absätze [0017], [0042], [0061], [0064], [0065], [0067], [0128] * | 1-11 | |
| A | EP 2 036 952 A1 (TORAY INDUSTRIES [JP])<br>18. März 2009 (2009-03-18)<br>* Ansprüche 1,3,7 * | 1-11 | |
| | | | RECHERCHIERTE SACHGEBIETE (IPC) |
| | | | C08L |

Der vorliegende Recherchenbericht wurde für alle Patentansprüche erstellt

1

| Recherchenort | Abschlußdatum der Recherche | Prüfer |
|---|---|---|
| Den Haag | 8. Dezember 2015 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 15 17 5791

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-12-2015

| Im Recherchenbericht angeführtes Patentdokument | Datum der Veröffentlichung | Mitglied(er) der Patentfamilie | Datum der Veröffentlichung |
|---|---|---|---|
| JP 2011256359 A | 22-12-2011 | JP 5397958 B2 | 22-01-2014 |
| | | JP 2011256359 A | 22-12-2011 |
| EP 0994155 A2 | 19-04-2000 | DE 69914277 D1 | 26-02-2004 |
| | | DE 69914277 T2 | 09-06-2004 |
| | | EP 0994155 A2 | 19-04-2000 |
| | | JP 3662424 B2 | 22-06-2005 |
| | | JP 2000103951 A | 11-04-2000 |
| | | KR 20000023490 A | 25-04-2000 |
| | | TW 503248 B | 21-09-2002 |
| | | US 6331584 B1 | 18-12-2001 |
| EP 1424360 A1 | 02-06-2004 | DE 10255044 A1 | 03-06-2004 |
| | | EP 1424360 A1 | 02-06-2004 |
| EP 2036952 A1 | 18-03-2009 | CA 2655971 A1 | 03-01-2008 |
| | | CN 101511944 A | 19-08-2009 |
| | | EP 2036952 A1 | 18-03-2009 |
| | | KR 20090031869 A | 30-03-2009 |
| | | MY 150503 A | 30-01-2014 |
| | | TW 200811238 A | 01-03-2008 |
| | | US 2009275678 A1 | 05-11-2009 |
| | | US 2012149837 A1 | 14-06-2012 |
| | | WO 2008001790 A1 | 03-01-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- US 2891920 A
- US 3294725 A
- DE 3704657 A1
- DE 3704655 A1
- DE 3631540 A1
- DE 3631539 A1
- US 5807914 A
- EP 430134 A2
- US 4888388 A
- EP 0839623 A
- WO 9615102 A
- EP 0500496 A


### In der Beschreibung aufgeführte Nicht-Patentliteratur


- Chemistry and Physics of Polycarbonates. **SCHNELL.** Polymer Reviews. Interscience Publishers, 1964, vol. 9
- Polycarbonates. **D. FREITAG ; U. GRIGO ; P.R. MÜLLER ; H. NOUVERTNE ; BAYER AG.** Encyclopedia of Polymer Science and Engineering. 1988, vol. 11, 648-718
- Polycarbonate. **U. GRIGO ; K. KIRCHNER ; P.R. MÜLLER.** Becker/Braun, Kunststoff-Handbuch, Band 3/1, Polycarbonate, Polyacetale, Polyester, Celluloseester. Carl Hanser Verlag, 1992, vol. 3-1, 117-299
- Ullmann's Encyclopedia of Industrial Chemistry. VCH-Verlag, 1992, vol. A21, 635, , 656
- **W. SCHOLTAN ; H. LANGE.** *Kolloid, Z. und Z. Polymere,* 1972, vol. 250, 782-796
- Plastics Additives Handbook. Hanser Verlag, 2000